# EUROPÄISCHE PATENTANMELDUNG

(11) **EP 1 987 973 A1**
(43) Veröffentlichungstag der Anmeldung: **05.11.2008**
(21) Anmeldenummer: 07008844.8
(22) Anmeldetag: 02.05.2007
(51) Int. Cl.: B60J 7/00

(54) **Sonnenschutzsystem**

(71) Anmelder: ArvinMeritor GmbH, 63128 Dietzenbach (DE)
(72) Erfinder: Bendel, Andreas, 65462 Ginsheim-Gustavsburg (DE)
(74) Vertreter: Sties, Jochen

(57) **Zusammenfassung**

Ein Sonnenschutzsystem, insbesondere für ein Fahrzeugdach, hat einen flächigen Sonnenschutz (12), der an einem Ende an einem in einer ersten und einer zweiten Führungsschiene (14, 16) verschieblich geführten Spriegel (18) befestigt ist. Der Spriegel (18) ist mit einem Seilsystem verbunden, bei dem ein erstes Seil (20) von der ersten Führungsschiene (14) über den Spriegel (18) zur zweiten Führungsschiene (16) und bei dem ein zweites Seil (22) von der zweiten Führungsschiene (16) über den Spriegel (18) zur ersten Führungsschiene (14) verläuft.

## Beschreibung

Die Erfindung betrifft ein Sonnenschutzsystem, insbesondere für ein Fahrzeugdach, mit einem flächigen Sonnenschutz, der an einem Ende an einem in einer ersten und einer zweiten Führungsschiene verschieblich geführten Spriegel befestigt ist.

Bei Fahrzeugdächern wird ein solcher Sonnenschutz eingesetzt, um z.B. eine Öffnung eines Schiebedachs gegen Sonneneinstrahlung zu verschließen. Oft ist der Sonnenschutz in Form eines Rollos ausgebildet, das vom Insassen in verschiedene Stellungen verstellt werden kann. Zum Ausziehen des Rollos muß der Insasse dabei gegen die Kraft einer Rückstellfeder arbeiten, die bestrebt ist, das Rollo in einer aufgewickelten Stellung zu halten. Damit sich das vordere Ende des Sonnenschutzes nicht unabsichtlich zurückbewegt, wenn es in seiner voll ausgezogenen Stellung oder einer Zwischenstellung verharren soll, sind Bremsen bekannt, bzw. kann die Reibung der Schlitten in der Schiene so hoch gewählt sein, daß diese stärker ist als die Rückzugskraft der Feder. Derartige Systeme sind aufwendig herzustellen und aufwendig zu justieren. Aufgrund unterschiedlicher Reibungskräfte der Schlitten in den beiden Führungsschienen kann es außerdem zu unterschiedlichen effektiven Rückzugskräften auf beide Enden des Spriegels kommen. Hierbei besteht die Gefahr, daß sich der Spriegel schräg stellt oder sogar verkantet.

Aufgabe der Erfindung ist es, ein herkömmliches Sonnenschutzsystem bezüglich der Positionierung des Spriegels zu verbessern.

Dies wird erfindungsgemäß erreicht, indem der Spriegel mit einem Seilsystem verbunden ist, bei dem ein erstes Seil von der ersten Führungsschiene über den Spriegel zur zweiten Führungsschiene und ein zweites Seil von der zweiten Führungsschiene über den Spriegel zur ersten Führungsschiene verläuft. Der Spriegel ist also im Prinzip in den kreuzförmigen Verlauf der beiden Seile eingespannt. Hierdurch wird zum einen gewährleistet, daß die beiden Enden des Spriegels sich stets parallel bewegen. Zum anderen wird durch das Seilsystem eine definierte Reibung aufgebracht, so daß die Zugwirkung der Rückzugsfeder leicht gekontert werden kann und sichergestellt ist, daß der Spriegel immer in der vom Fahrzeuginsassen gewünschten Stellung verharrt.

In einer bevorzugten Ausführungsform verläuft das erste Seil in einem vorderen Abschnitt entlang der ersten Führungsschiene, in einem mittleren Abschnitt entlang des Spriegels und in einem hinteren Abschnitt entlang der zweiten Führungsschiene, während das zweite Seil in einem vorderen Abschnitt entlang der zweiten Führungsschiene, in einem mittleren Abschnitt entlang des Spriegels und in einem hinteren Abschnitt entlang der ersten Führungsschiene verläuft. Diese Anordnung sorgt z.B. dafür, daß die Seile für den Benutzer stets unsichtbar bleiben.

Die erfindungsgemäße Gestaltung eignet sich insbesondere, wenn der Sonnenschutz als Rollo ausgebildet ist. Sie ist aber auch bei flächigen, am Stück verschiebbaren Sonnenschutzelementen einsetzbar.

Bevorzugt sind die Enden der Seile im Bereich der Enden der Führungsschienen fixiert. Während der Bewegung des Spriegels bewegen sich die Seile als solche nicht. Lediglich der Spriegel verfährt entlang des Seilverlaufs. Dabei sollten sich die Seile entlang der gesamten Länge der Führungsschienen erstrecken. Die Seile könnten natürlich auch durch Abschnitte eines einziges Seils gebildet sein.

Die Seile können abschnittsweise in den Führungsschienen verlaufen, so daß kein zusätzlicher Bauraum beansprucht wird.

Im Übergang zum Spriegel werden die Seile vorzugsweise über eine Umlenkrolle geführt, um eine leichtgängige Bewegung des Spriegels zu ermöglichen.

Beide Seile können über dieselbe Umlenkrolle geführt sein, was Teile und Bauraum einspart.

Dabei ist vorteilhaft an jedem Ende des Spriegels eine Umlenkrolle vorgesehen.

In einer bevorzugten Ausführungsform ist am Spriegel eine Bremse für den Sonnenschutz vorgesehen, die eine Klemmvorrichtung aufweist, die in einer Sperrstellung wenigstens eines der und bevorzugt beide Seile erfaßt. Auf diese Weise läßt sich der Spriegel auf einfache Weise gegen unerwünschte Bewegung blockieren.

Weitere Merkmale und Vorteile der Erfindung ergeben sich aus der nachfolgenden Beschreibung eines Ausführungsbeispiels mit Bezug auf die beigefügten Zeichnungen. In diesen zeigen:
- Figur 1 eine schematische Darstellung eines erfindungsgemäßen Sonnenschutzsystems;
- Figur 2 eine schematische perspektivische Darstellung einer Umlenkrolle eines erfindungsgemäßen Sonnenschutzsystems;
- Figur 3 eine Rollobremse für ein erfindungsgemäßes Sonnenschutzsystem in Sperrstellung; und
- Figur 4 die Rollobremse in Figur 3 in Verschiebestellung.

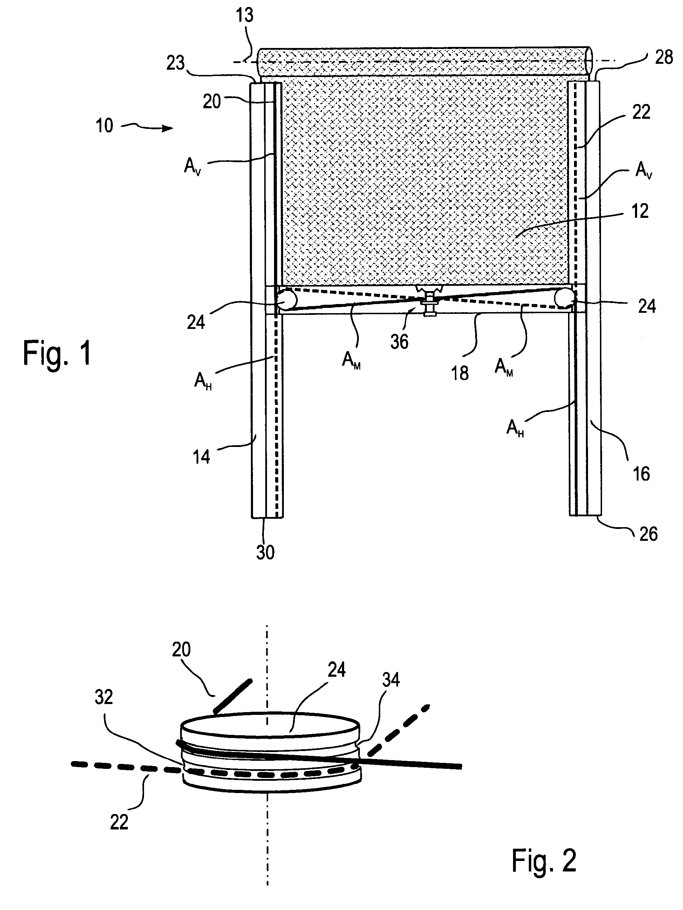

Bei dem in Figur 1 gezeigten Sonnenschutzsystem 10 ist ein Sonnenschutz 12 in Form eines ausziehbaren Rollos zwischen zwei Führungsschienen 14, 16 verschieblich geführt. An einem Ende ist der Sonnenschutz 12 auf einer Wickelwelle 13 aufgerollt (nur angedeutet in Fig. 1). Diese ist normalerweise quer zu einer Fahrzeuglängsrichtung entlang eines Fahrzeugdachs befestigt, z.B. an einem Ende einer Schiebedachöffnung (nicht gezeigt). Auf dieser Wickelwelle 13 kann der Sonnenschutz 12 in einer ersten Endstellung nahezu vollständig aufgenommen sein, in der sich der Spriegel 18 ganz am in Figur 1 oberen Ende der Führungsschienen 14, 16 befindet.

Das Sonnenschutzsystem 10 ist in Figur 1 in einer mittleren Zwischenstellung gezeigt.

An seinem freien Ende ist der Sonnenschutz 12 an einem Spriegel 18 befestigt, der sich zwischen den beiden Führungsschienen 14, 16 erstreckt und der in jeder der Führungsschienen 14, 16 durch einen (nicht gezeigten) Schlitten geführt ist. Diese Technik ist von herkömmlichen Sonnenschutzsystemen bekannt.

Zur Positionierung des Spriegels 18 ist außerdem ein Seilsystem vorgesehen, das zwei Seile 20, 22 aufweist. Zur besseren Unterscheidung ist das Seil 22 in den Figuren mit gestrichelten Linien dargestellt, während das Seil 20 mit einer durchgezogenen Linie gezeichnet ist. Die Seile 20, 22 können zwei separate Seilstücke oder aber auch Abschnitte eines einzigen Seils sein.

Die Enden der Seile 20, 22 sind im gezeigten Fall jeweils an den Enden der Führungsschienen 14, 16 fixiert. Die Seile 20, 22 erstrecken sich also entlang der gesamten Länge der Führungsschienen 14, 16.

Das Seil 20 verläuft in einem vorderen Abschnitt Aᵥ von einem vorderen Ende 23 der ersten Führungsschiene 14 entlang der ersten Führungsschiene 14 bis zum Spriegel 18. Dort wird es über eine erste Umlenkrolle 24 um 90° umgelenkt und verläuft nun in einem mittleren Abschnitt AM entlang des Spriegels 18 bis zum anderen Ende des Spriegels 18. Dort wird es in einer zweiten Umlenkrolle 24 erneut um 90° umgelenkt und verläuft über die restliche Strecke in einem hinteren Abschnitt A_{H} entlang der zweiten Führungsschiene 16 bis zu deren hinteren Ende 26.

Analog verläuft das zweite Seil 22 vom vorderen Ende 28 der zweiten Führungsschiene 16 zunächst in einem vorderen Abschnitt A_{V} entlang der zweiten Führungsschiene 16 bis zur zweiten der beiden Umlenkrollen 24. Dort wird es um 90° umgelenkt, verläuft in einem mittleren Abschnitt AM bis zur ersten der Umlenkrollen 24 am anderen Ende des Spriegels 18, wo es erneut um 90° umgelenkt wird und nun in einem hinteren Abschnitt A_{H} bis zum hinteren Ende 30 der ersten Führungsschiene 14 verläuft.

Die beiden Umlenkrollen 24 sind jeweils am Spriegel 18 befestigt und auf bekannte Weise drehbar gelagert.

Beide Seile 20, 22 laufen jeweils über dieselbe Umlenkrolle 24. In den Umlenkrollen 24 ist für jedes der Seile 20, 22 eine eigene Nut 32, 34 vorgesehen, die parallel zueinander auf dem Umfang der Umlenkrolle 24 ausgebildet sind.

In der Mitte des Spriegels 18 überkreuzen sich die beiden Seile 20, 22.

Die hinteren Abschnitte A_{H} der beiden Seile 20, 22, sowie die vorderen Abschnitte A_{V} der beiden Seile 20, 22 verlaufen parallel und liegen sich jeweils gegenüber, wobei in jeder der Führungsschienen 14, 16 jeweils ein Seilstück angeordnet ist.

Die vorderen und hinteren Abschnitte A_{V}, A_{H} der Seile 20, 22 erstrecken sich hier innerhalb der Führungsschienen 14, 16, z.B. in einem separaten (nicht gezeigten) Führungskanal.

Der Spriegel 18 ist zwischen den beiden Seilen 20, 22 eingespannt. Bei einer Verschiebung des Spriegels 18 entlang der Führungsschienen 14, 16 bewegt sich der Spriegel 18 entlang der beiden Seile 20, 22, wobei die Seile 20, 22 selbst unbewegt bleiben und sich lediglich der Anteil der vorderen bzw. hinteren Abschnitte A_{V}, A_{H} entsprechend ändert. Je nach der Position des Spriegels 18 verkürzen bzw. verlängern sich die vorderen bzw. hinteren Abschnitte A_{V}, A_{H} entsprechend. In der vorderen bzw. der hinteren Endstellung des Rollos kann sich die Länge der entsprechenden Abschnitte A_{V}, A_{H} sogar praktisch zu Null reduzieren, falls sich der Spriegel 18 dann ganz an einem Ende des Seils 20 bzw. 22 befindet.

Über das Seilsystem wird eine definierte Reibung auf den Spriegel 18 ausgeübt, die so hoch gewählt ist, daß eine unbeabsichtigte Verstellung des Spriegels 18 entlang der Führungsschienen 14, 16 ausgeschlossen ist. Über diese Reibung kann auch eine eventuelle Rückzugskraft einer Rückzugfeder für den Sonnenschutz 12 gekontert werden.

Da das Verhältnis des vorderen Abschnitts A_{V} zum hinteren Abschnitt A_{H} bei beiden Seilen 20, 22 stets gleich ist, kann sich der Spriegel 18 nur genau senkrecht zu den Führungsschienen 14, 16 bewegen und sich nicht zwischen den Führungsschienen 14, 16 schräg stellen.

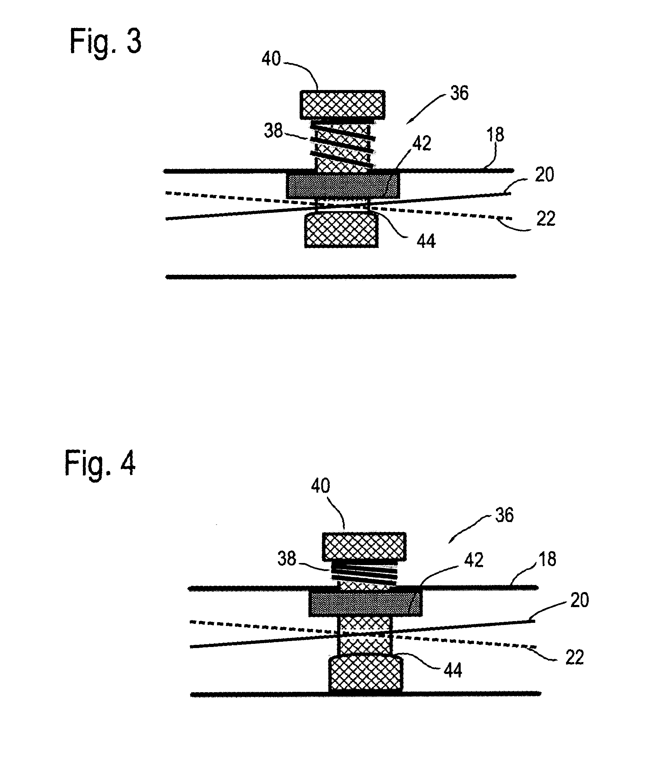

An der Überkreuzungsstelle der Seile 20, 22 in der Mittel des Spriegels 18 ist eine Bremse 36 angeordnet. Die Bremse 36 weist eine Klemmvorrichtung auf, die in einer in Figur 3 gezeigten Sperrstellung den Spriegel 18 an den beiden Seilen 20, 22 festklemmt, indem ein von einer Feder 38 beaufschlagter, senkrecht zum Spriegel 18 verschieblich gelagerter Stempel 40 die Seile 20, 22 gegen eine Anschlagfläche 42 drückt. Hierdurch erhöht sich die Reibung zwischen Spriegel 18 und Seilen 20, 22 so stark, daß jede Bewegung des Spriegels 18 gehemmt wird. Die Sperrstellung ist die Normalstellung der Bremse 36.

Der Benutzer kann die Klemmvorrichtung durch Verschieben des Stempels 40 in Richtung des Spriegels 18 in eine Verschiebestellung bringen (Figur 4), in der die Klemmfläche 44 des Stempels 40 von der Anschlagfläche 42 so weit beabstandet ist, daß die Seile 20, 22 freigegeben sind. In der Verschiebestellung läßt sich der Spriegel 18 entlang der Führungsschienen 14, 16 bewegen. Läßt der Benutzer den Stempel 40 wieder los, wird die Klemmfläche 44 durch die Kraft der Feder 38 zur Anschlagfläche 42 bewegt, so daß die Seile 20, 22 zwischen der Anschlagfläche 42 und der Klemmfläche 44 geklemmt werden und der Spriegel 18 blockiert ist.Die Bremse 36 läßt sich beispielsweise in einen am Spriegel 18 befindlichen Griff zur Verschiebung des Sonnenschutzes 12 integrieren.

### Bezugszeichen

- 10: Sonnenschutzsystem
- 12: Sonnenschutz
- 14: Führungsschiene
- 16: Führungsschiene
- 18: Spriegel
- 20: Seil
- 22: Seil
- 23: Ende
- 24: Umlenkrolle
- 26: Ende
- 28: Ende
- 30: Ende
- 32: Nut
- 34: Nut
- 36: Bremse
- 38: Feder
- 40: Stempel
- 42: Anschlagfläche
- 44: Klemmfläche

## Patentansprüche

1. Sonnenschutzsystem, insbesondere für ein Fahrzeugdach, mit einem flächigen Sonnenschutz (12), der an einem Ende an einem in einer ersten und einer zweiten Führungsschiene (14, 16) verschieblich geführten Spriegel (18) befestigt ist,
**dadurch gekennzeichnet, daß** der Spriegel (18) mit einem Seilsystem verbunden ist, bei dem ein erstes Seil (20) von der ersten Führungsschiene (14) über den Spriegel (18) zur zweiten Führungsschiene (16) und
ein zweites Seil (22) von der zweiten Führungsschiene (16) über den Spriegel (18) zur ersten Führungsschiene (14) verläuft.

2. Sonnenschutzsystem nach Anspruch 1, **dadurch gekennzeichnet, daß** das erste Seil (20) in einem vorderen Abschnitt (A_{V}) entlang der ersten Führungsschiene (14), in einem mittleren Abschnitt (AM) entlang des Spriegels (18) und in einem hinteren Abschnitt (A_{H}) entlang der zweiten Führungsschiene (16) verläuft, und das zweites Seil (22) in einem vorderen Abschnitt (A_{V}) entlang der zweiten Führungsschiene (16), in einem mittleren Abschnitt (AM) entlang des Spriegels (18) und in einem hinteren Abschnitt (A_{H}) entlang der ersten Führungsschiene (14) verläuft.

3. Sonnenschutzsystem nach einem der vorhergehenden Ansprüche, **dadurch gekennzeichnet, daß** der Sonnenschutz (12) ein Rollo ist.

4. Sonnenschutzsystem nach einem der vorhergehenden Ansprüche, **dadurch gekennzeichnet, daß** die Enden der Seile (20, 22) im Bereich der Enden (23, 26, 28, 30) der Führungsschienen (14, 16) fixiert sind.

5. Sonnenschutzsystem nach einem der vorhergehenden Ansprüche, **dadurch gekennzeichnet, daß** sich die Seile (20, 22) entlang der gesamten Länge der Führungsschienen (14, 16) erstrecken.

6. Sonnenschutzsystem nach einem der vorhergehenden Ansprüche, **dadurch gekennzeichnet, daß** die Seile (20, 22) abschnittsweise in den Führungsschienen (14, 16) verlaufen.

7. Sonnenschutzsystem nach einem der vorhergehenden Ansprüche, **dadurch gekennzeichnet, daß** die Seile (20, 22) im Übergang zum Spriegel (18) über eine Umlenkrolle (24) geführt sind.

8. Sonnenschutzsystem nach einem der vorhergehenden Ansprüche, **dadurch gekennzeichnet, daß** beide Seile (20, 22) über dieselbe Umlenkrolle (24) geführt sind.

9. Sonnenschutzsystem nach einem der vorhergehenden Ansprüche, **dadurch gekennzeichnet, daß** an jedem Ende des Spriegels (18) eine Umlenkrolle (24) vorgesehen ist.

10. Sonnenschutzsystem nach einem der vorhergehenden Ansprüche, **dadurch gekennzeichnet, daß** am Spriegel (18) eine Bremse (36) für den Sonnenschutz (12) vorgesehen ist, die eine Klemmvorrichtung aufweist, die in einer Sperrstellung wenigstens eines der Seile (20, 22) erfaßt.
